(19) Europäisches Patentamt
European Patent Office
Office européen des brevets

(11) **EP 4 686 823 A1**

(12) **EUROPEAN PATENT APPLICATION**

(43) Date of publication:
**04.02.2026  Bulletin 2026/06**

(21) Application number: **25190823.2**

(22) Date of filing: **21.07.2025**

(51) International Patent Classification (IPC):
$F02D\ 37/02^{(2006.01)}$     $F02D\ 41/14^{(2006.01)}$
$F02D\ 41/18^{(2006.01)}$     $F02P\ 5/04^{(2006.01)}$
$F02P\ 5/15^{(2006.01)}$     $F02P\ 5/152^{(2006.01)}$

(52) Cooperative Patent Classification (CPC):
**F02P 5/1504; F02D 37/02; F02D 41/1454;**
**F02D 41/18; F02P 5/045;** F02D 19/02;
F02D 41/0027; F02P 5/1521

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **01.08.2024  CN 202411050592**

(71) Applicant: **Cummins, Inc.**
**Columbus, Indiana 47201 (US)**

(72) Inventors:
• **WANG, Kunpeng**
  **Indiana, 47201 (US)**
• **YANG, Zhao**
  **Indiana, 47201 (US)**
• **WANG, Yingjie**
  **Indiana, 47201 (US)**

(74) Representative: **Cleveland Scott York**
**5 Norwich Street**
**London EC4A 1DR (GB)**

Remarks:
A request for correction of the description has been filed pursuant to Rule 139 EPC. A decision on the request will be taken during the proceedings before the Examining Division (Guidelines for Examination in the EPO, A-V, 3.).

(54) **COMBUSTION CONTROL FOR PREVENTING KNOCK AND PRE-IGNITION DURING TRANSIENTS IN SPARK IGNITION INTERNAL COMBUSTION ENGINES**

(57)    Systems, methods, and apparatuses are disclosed that determine a spark timing correction for an internal combustion engine during a transient event. The spark timing correction delays the spark timing to reduce or mitigate knock. The spark timing correction is based on a lambda difference between a steady state lambda that is based on engine speed and engine torque and a feedback lambda from operation of the engine. The feedback lambda can be based on a calculated lambda or a sensed lambda.

*Fig. 2*

## Description

### Field of the Invention:

The present application is related to internal combustion engines, and more particularly to combustion control to prevent knock and pre-ignition during transients in spark ignition internal combustion engines.

## BACKGROUND

Mitigation of knock and pre-ignition during operation of internal combustion engines, including, for example, spark ignition combustion engines, remains to be of particular importance. During transient conditions, the risk for knock is increased due to the need to increase fueling which leads to low transient lambda. Traditional techniques respond to knock detection after the increase in fueling with a spark timing delay to mitigate the occurrence of knock. However, since the fueling is increased before the spark timing is delayed, the knock occurrence risk is increased. Furthermore, delays in spark timing also increase the risk for pre-ignition. Therefore, further improvements in this technological area are needed.

## SUMMARY

The present application includes systems, methods, and apparatuses that determine and implement spark timing corrections during a transient event of a spark ignition internal combustion engine. The internal combustion engine nominally or normally operates using a steady state lambda (also referred to as air-fuel ratio or $\lambda$) and steady state spark timing in one or more combustion chambers. During a transient event, the steady state or base fuel amount is increased to a final fuel amount to the engine which reduces the air-fuel ratio (lambda or $\lambda$), creating a spark timing correction condition. A spark timing correction is then determined that is based on a lambda difference between the steady state lambda and a feedback lambda that is sensed by an oxygen sensor and/or calculated from the final fuel amount and charge flow to the engine. The spark timing correction delays the steady state spark timing based on the lambda difference to reduce the risk of knock while simultaneously increasing the transient response torque capability of the internal combustion engine.

This summary is not intended to identify key or essential features of the claimed subject matter, nor is it intended to be used as an aid in limiting the scope of the claimed subject matter. Further embodiments, forms, objects, features, advantages, aspects, and benefits shall become apparent from the following description and drawings.

## BRIEF DESCRIPTION OF THE DRAWINGS

The description herein makes reference to the accompanying figures wherein like reference numerals refer to like parts throughout the several views.

FIG. 1 illustrates a schematic block diagram of an exemplary internal combustion engine system that includes a spark ignition internal combustion engine and an electronic controller.

FIG. 2 illustrates a block diagram of certain components of an exemplary electronic controller used to control certain spark timing operations of components of the engine system of FIG. 1 in response to a transient event.

FIG. 3 is a graphical illustration of sparking timing versus lambda delineating exemplary knock, pre-ignition, and normal combustion regions along with an exemplary adjustment in steady state spark timing and steady state lambda in response to a transient event.

FIG. 4 illustrates a flow diagram of an exemplary process of operation of the internal combustion engine system of FIG. 1 to provide a spark timing adjustment in response to a transient event.

The foregoing summary, as well as the following detailed description of certain embodiments of the present invention, will be better understood when read in conjunction with the appended drawings. For the purpose of illustrating the invention, there is shown in the drawings, certain embodiments. It should be understood, however, that the present invention is not limited to the arrangements and instrumentalities shown in the attached drawings. Further, like numbers in the respective figures indicate like or comparable parts.

## DESCRIPTION OF THE ILLUSTRATED EMBODIMENTS

Certain terminology is used in the foregoing description for convenience and is not intended to be limiting. Words such as "upper," "lower," "top," "bottom," "first," and "second" designate directions in the drawings to which reference is made. This terminology includes the words specifically noted above, derivatives thereof, and words of similar import. Additionally, the words "a" and "one" are defined as including one or more of the referenced item unless specifically noted.

The phrase "at least one of" followed by a list of two or more items, such as "A, B or C," means any individual one of A, B or C, as well as any combination thereof.

Embodiments of the present application include a control strategy and method that can improve spark ignition internal combustion engine performance to better respond to transient conditions while mitigating or reducing knock and pre-ignition. A spark timing adjustment is made to delay a spark timing during the transient to reduce or mitigate knock. In an embodiment, the spark timing is adjusted based on a lambda difference between a feedback lambda that is sensed or calculated from the final fuel amount to the engine and a steady state lambda. Embodiments of the present application can also be configured to reduce or mitigate pre-ignition by recovering the spark timing if lambda exceeds a revery threshold. Embodiments of the present application may also allow the spark timing adjustment to be performed in real time in conjunction with the lambda change that is provided to respond to the transient event.

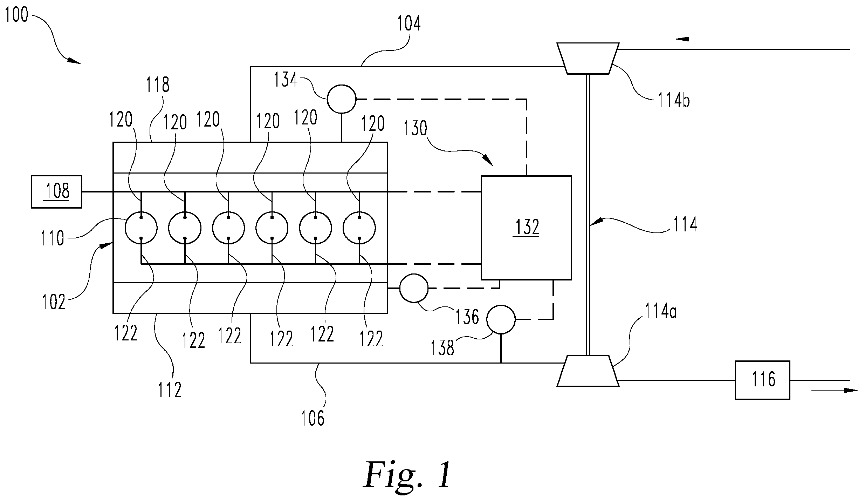

FIG. 1 illustrates a schematic block diagram of an exemplary internal combustion engine system 100 that includes a spark ignition internal combustion engine 102 that is connected to an intake 104 and an exhaust 106. It shall be appreciated that the illustrated configuration and components of the engine system 100 are but one example, and that the disclosure contemplates that a variety of different engine systems and the associated components may be utilized. Further, the engine system 100 may be used in a variety of different applications or platforms, and moreover with a variety of different types of machines, vehicles, and/or devices, including, but not limited to, stationary devices as well as on-road vehicles, including automotive applications.

Engine 102 can receive fuel from one or more fuel sources 108. Further, while the illustrated embodiment may generally depict an engine system 100 used with spark ignition engine applications, the engine system 100 can be structured to operate with a variety of types of fuels that are delivered from the fuel source 108, including, for example, gaseous fuels such as hydrogen, natural gas, bio-gas, methane, propane, gasoline, ethanol, producer gas, field gas, liquefied natural gas, compressed natural gas, landfill gas, gaseous fuel, and/or any combination thereof, among other fuels. In a particular embodiment, engine 102 is a spark-ignited internal combustion engine that combust hydrogen fuel that is provided to the combustion chambers of engine 102 in an amount that is based on engine speed and engine torque and corresponds to an air-fuel ratio or lambda ($\lambda$).

According to the exemplary embodiment, the engine 102 includes an engine block that may define at least a portion of one or more cylinders 110. For example, according to certain embodiments, the engine 102 can include six cylinders 110 in an in-line arrangement as illustrated in FIG. 1. However, the engine 102 may have any different number of cylinders 110, as well as cylinders in a variety of different arrangements. Additionally, each cylinder 110 is sized to accommodate the slideable displacement of a piston (not shown) along at least a portion of the cylinder 110 such that the pistons may reciprocate between a top-dead-center position and a bottom-dead-center position. Each of the cylinders 110, its respective piston and cylinder head, form a combustion chamber. Further, at least a portion of the forces generated by the slideable displacement of the piston along at least a portion of the cylinder during combustion events in the combustion chamber are transmitted to a mechanical drive system (not shown.) For example, the pistons are typically operably coupled to a crank shaft of the engine system 100 that converts the reciprocal movement of the pistons of the engine 102 into rotational movement.

The cylinders 110 are in selective fluid communication with the intake 104 such that a charge flow from intake 104 can be delivered to the combustion chamber. The cylinders 110 are also in selective fluid communication with the exhaust 106 such that exhaust gases produced by combustion of fuel(s) in the combustion chambers can be delivered through an exhaust manifold 112 of the exhaust 106. The exhaust 106 can include and/or be coupled to a variety of different components, such as, for example, one or more turbines 114a of turbocharger 114, as well as an aftertreatment system 116. Engine system 100 may also include an exhaust gas recirculation system (not shown), such as a high pressure and/or a low pressure exhaust gas recirculation system. However, embodiments without a turbocharger and/or exhaust gas recirculation system are also contemplated.

Operation of engine 102 can include the delivery of charge flow and fuel to the combustion chambers of the engine 102. According to certain embodiments, fuel such as hydrogen gas can be injected into each cylinder 110 via a corresponding one of the injectors 120. Other embodiments contemplate gaseous fuel is fumigated into the charge flow upstream of the cylinders 110 of engine 102, such as, for example, upstream or downstream of the compressor 114b of turbocharger 144 at intake 104, at the intake manifold 118, and/or cylinder ports, or can be fumigated into the charge mixture in-cylinder. Combustion of the air-fuel mixture can be initiated with igniters 122, such as spark plugs, which create a spark at each of the cylinders 110. The delivery of the charge mixture, the fuel, and/or the ignition of the charge and fuel mixture in the combustion chambers may be, at least in part, electrically controlled by an electronic control system 130 of the engine system 100, as discussed further below.

In an embodiment, engine 102 includes pistons that reciprocate in the corresponding cylinders 110 during a four stroke cycle in which a crankshaft rotates 720 degrees per cycle. The term "four stroke" herein means the following four strokes - intake, compression, power, and exhaust - that the piston completes during two separate revolutions of the engine's crankshaft, which is a combustion cycle. A stroke begins either at a top dead center (TDC) when the piston is at the top of cylinder, or at a bottom dead center (BDC), when the piston has reached its lowest point in the cylinder.

During the intake stroke, the piston descends away from cylinder head above the combustion chamber of the cylinder 110 to a bottom (not shown) of the cylinder 110, thereby reducing the pressure in the combustion chamber. A combustion charge is created in the combustion chamber by an intake of a charge from intake 104 through intake ports when the intake valves are opened.

During the compression stroke in a nominal or standard mode of operation, the intake valves and the exhaust valves are closed. The piston returns toward TDC and fuel is injected near TDC in an injection event, and the compressed fuel-air mixture ignites in the combustion chamber after a short delay. The ignition of the air and fuel causes a rapid increase in pressure in the combustion chamber, which is applied to the piston during its power stroke toward the BDC. Combustion phasing in combustion chamber is calibrated so that the increase in pressure in combustion chamber pushes the piston, providing a net positive in the force/work/power of the piston to rotate the crankshaft.

As discussed further below, during transient events of engine 102, control system 130 is configured to determine the increase in the base fuel amount for injection during the injection event to respond to the transient event. Simultaneously, one of a calculated lambda and a sensed lambda to the engine 102 is used as a feedback lambda to determine a lambda difference with a steady state lambda that is based on engine speed and engine torque. A spark timing adjustment to a steady state spark timing is then determined for the transient event based on the lambda difference. The spark timing adjustment delays the spark timing during the transient event to reduce or mitigate the potential for knock created by the decrease in lambda during the transient event. Since the spark timing adjustment is based on the lambda difference, it is not necessary to detect or sense the presence of knock in order to delay the spark timing.

Control system 130 includes an electronic controller or electronic control unit (ECU) 132 configured to control various operational aspects of engine system 100, including fuel injection events and spark timing events, among other operations. The electronic controller 132 can be implemented in a number of ways. Further, the electronic controller 132 can execute operating logic that defines various control, management, and/or regulation functions. The operating logic may be in the form of one or more microcontroller or microprocessor routines stored in a non-transitory memory, dedicated hardware, such as a hardwired state machine, analog calculating machine, various types of programming instructions, and/or other forms as would occur to those skilled in the art.

Electronic controller 132 may be provided as a single component, or a collection of operatively coupled components, and may comprise digital circuitry, analog circuitry, or a hybrid combination of both of these types. When of a multi-component form, electronic controller 132 may have one or more components remotely located relative to the others in a distributed arrangement. Electronic controller 132 can include multiple processing units arranged to operate independently, in a pipeline processing arrangement, in a parallel processing arrangement, or the like. In one embodiment, electronic controller 132 includes several programmable microprocessing units of a solid-state, integrated circuit type that are distributed throughout the internal combustion engine system 100 that each includes one or more processing units and non-transitory memory.

For the depicted embodiment, electronic controller 132 includes a computer network interface to facilitate communications using standard Controller Area Network (CAN) communications or the like among various system control units. It should be appreciated that the depicted modules or other organizational units of electronic controller 132 refer to certain operating logic performing indicated operations that may each be implemented in a physically separate controller of electronic controller 132 and/or may be virtually implemented in the same controller. Electronic controller 132 may include one or more organizational units or circuits that may be implemented in hardware and/or as computer instructions on a non-transient computer readable storage medium and may be distributed across various hardware or computer based components.

Example and non-limiting implementation elements of control system 130 and/or organizational units of electronic controller 132 include, for example, sensors such as charge flow sensors 134, engine sensors 136 (such as speed, torque and/or fuel sensors), oxygen sensors 138, and/or other sensors providing any value determined herein, sensors providing any value that is a precursor to a value determined herein, datalink and/or network hardware including communication chips, oscillating crystals, communication links, cables, twisted pair wiring, coaxial wiring, shielded wiring, transmitters, receivers, and/or transceivers, logic circuits, hard-wired logic circuits, reconfigurable logic circuits in a particular non-transient state configured according to the module specification, any actuator including at least an electrical, hydraulic, or pneumatic actuator, a solenoid, an op-amp, analog control elements (springs, filters, integrators, adders, dividers, gain elements), and/or digital control elements. Sensors 134, 136, 138 and/or any other sensors may be physical sensors, virtual sensors, and/or combinations of physical and virtual sensors.

Electronic controller 132 and/or any of its constituent processors/controllers may include one or more signal conditioners, modulators, demodulators, Arithmetic Logic Units (ALUs), Central Processing Units (CPUs), limiters, oscillators, control clocks, amplifiers, signal conditioners, filters, format converters, communication ports, clamps, delay devices, memory devices, Analog to Digital (A/D) converters, Digital to Analog (D/A) converters, and/or different circuitry or functional components as would occur to those skilled in the art to perform the desired communications.

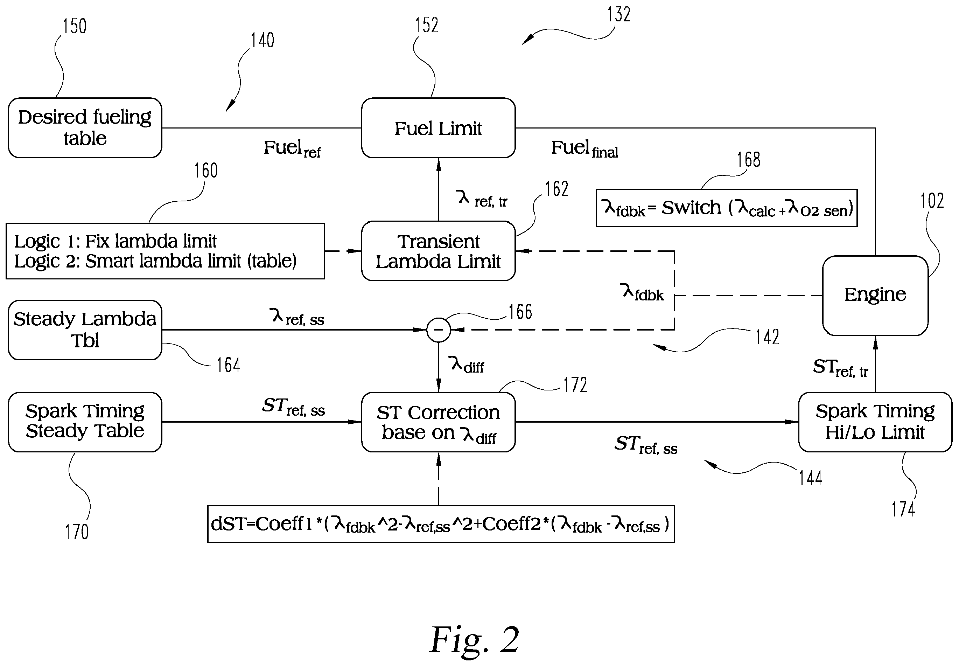

Referencing FIG. 2, according to certain embodiments, electronic controller 132 includes a fuel amount determination circuit 140, a lambda evaluation circuit 142, and a spark timing determination circuit 144. The circuits 140, 142, 144 operate in coordination to determine an amount of injection of fuel into cylinders 110 of engine 102, lambda parameters associated with the fuel injection, and a spark timing during a transient event of engine 102 that mitigates knock and pre-ignition. In an embodiment, the electronic controller 132 is configured to determine the spark timing correction in real time in conjunction with changes in the fueling to the internal combustion engine that respond to the transient event. In an embodiment, electronic controller 132 is configured to determine the spark timing correction without sensing of knock and/or without detecting the presence of knock.

Fuel amount determination circuit 140 outputs a reference fuel amount ($Fuel_{ref}$) from a desired fueling table 150. The desired fueling table 150 can be any suitable look-up table, such as a table that provides target or reference fuel amounts based on engine speed and engine load. Embodiments contemplate determining the reference fuel amount from look-up tables, models, calculations, etc.

Fuel determination circuit 140 receives the reference fuel amount ($Fuel_{ref}$) from desired fueling table 150 at fuel limiter 152. Fuel limiter 152 also receives a transient lambda limit ($\lambda_{ref,tr}$) 162 from lambda evaluation circuit 142, discussed further below. Fuel limiter 152 evaluates the reference fuel amount ($Fuel_{ref}$) and the transient lambda limit ($\lambda_{ref,tr}$) to output a final fuel amount ($Fuel_{final}$), which is used to fuel engine 102 during the transient event.

Lambda evaluation circuit 142 includes operating logic 160 that can include, for example, a first logic that determines a fixed lambda limit for the transient event. Operating logic 160 may also include a second logic that determines a smart lambda limit, such as from a look-up table, for the transient event. The fixed lambda limit and/or smart lambda limit are provided to transient lambda limiter 162. Transient lambda limiter 162 also receives a feedback lambda ($\lambda_{fdbk}$) 168 from at least one of two sources. One source is a calculated lambda ($\lambda_{calc}$), and a second source is a sensed lambda ($\lambda_{O2sen}$) from oxygen sensor 138. Transient lambda limiter 162 evaluates the feedback lambda ($\lambda_{fdbk}$) 168 in conjunction with the fixed lambda limit and smart lambda limit to output the transient lambda limit ($\lambda_{ref,tr}$) 162 evaluated by fuel limiter 152.

Lambda evaluation circuit 142 also includes a steady state lambda look-up table 164 which is used to determine a steady state lambda ($\lambda_{ref,ss}$) at the engine speed and engine torque. A difference between the steady state lambda ($\lambda_{ref,ss}$) and feedback lambda ($\lambda_{fdbk}$) is determined at operator 166. The determined lambda difference ($\lambda_{diff}$) is output to spark timing determination circuit 144. The lambda difference ($\lambda_{diff}$) provides an indicator of the decrease in lambda required to respond to the transient event.

Spark timing determination circuit 144 includes steady state spark timing look-up table 170 which is used to determine a steady state reference spark timing ($ST_{ref,ss}$) at the engine speed and engine torque. The steady state reference spark timing ($ST_{ref,ss}$) and lambda difference ($\lambda_{diff}$) are provided to spark timing correction calculator 172. Spark timing correction calculator 172 determines a speed of a spark timing correction to the steady state reference spark timing using the following equation:

$$dST = Coeff1 * (\lambda_{fdbk}^2 - \lambda_{ref,ss}^2) + Coeff2 * (\lambda_{fdbk} - \lambda_{ref,ss}) \quad \textbf{Equation 1}$$

Coeff1 and Coeff2 are coefficients determined from one dimensional tables are calibrated using transient response tests to determine the spark timing adjustment that will reduce or mitigate knock at various engine speeds. In addition, lambda difference ($\lambda_{diff}$) may be substituted for ($\lambda_{fdbk} - \lambda_{ref,ss}$). Spark timing correction calculator 172 outputs corrected spark timing ($ST_{corr}$), which is evaluated by spark timing limiter 174 to apply any high or low adjustment limits to the corrected spark timing ($ST_{corr}$). The spark timing limiter 174 outputs a transient spark timing ($ST_{ref,tr}$) to engine 102. The transient spark timing ($ST_{ref,tr}$) is used during the transient event along with the final fuel amount to reduce or mitigate knock.

In an embodiment, spark timing correction calculator 172 evaluates a derivative of lambda difference ($\lambda_{diff}$) to compensate for any delays in obtaining a lambda measurement. Other embodiments contemplate other techniques for processing and/or evaluating lambda difference ($\lambda_{diff}$) to determine a spark timing correction or adjustment.

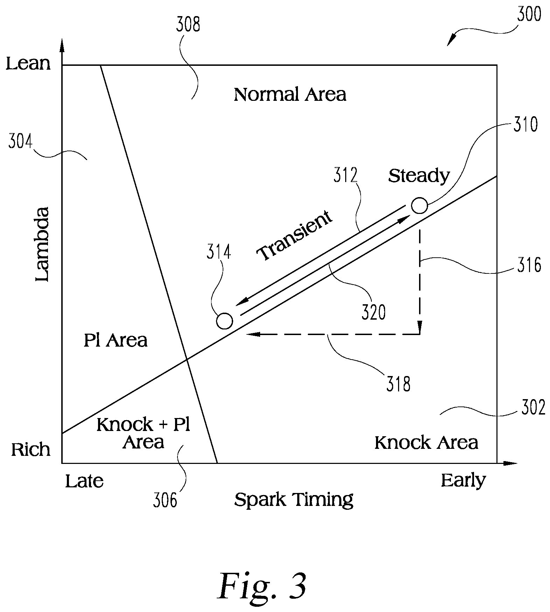

Referring to FIG. 3, an exemplary spark timing adjustment for a transient event is illustrated by graphic 300. Graphic 300 depicts spark timing along an X-axis and lambda along a Y-axis. Graphic 300 also delimits a knock area 302, a pre-ignition area 304, a combined knock and pre-ignition area 306, and a normal area 308 not subject to knock and/or pre-ignition. A steady state operating point 310 indicates a steady state spark timing and steady state lambda.

In response to a transient event, controller 132, configured such as discussed above, is operable to delay in real time the spark timing while decreasing the lambda low limit to increase richness to provide more fuel to respond to the transient event. Since the spark timing is delayed, there is a lower risk of knock and more margin to intentionally reduce the lambda low limit to inject more fuels for better torque response. The decrease in lambda and associated spark timing delay are indicated by adjustment path 312 extending from steady state operating point 310 to transient operating point 314. In contrast, traditional approaches respond to transient events only when lambda drops into the knock area, as indicated by lambda adjustment 316, and then delaying spark timing when knock is detected by a knock sensor, as indicated by spark timing adjustment 318.

The approach according to the present disclosure provides a spark timing adjustment, i.e., the transient spark timing ($ST_{ref,tr}$) discussed above, that is active before knock occurs to reduce or mitigate any knock that might occur during the transient event. Once the transient event is over, controller 132 allows a rapid return to the steady state spark timing at operating point 310 to reduce or mitigate pre-ignition, as indicated by return path 320.

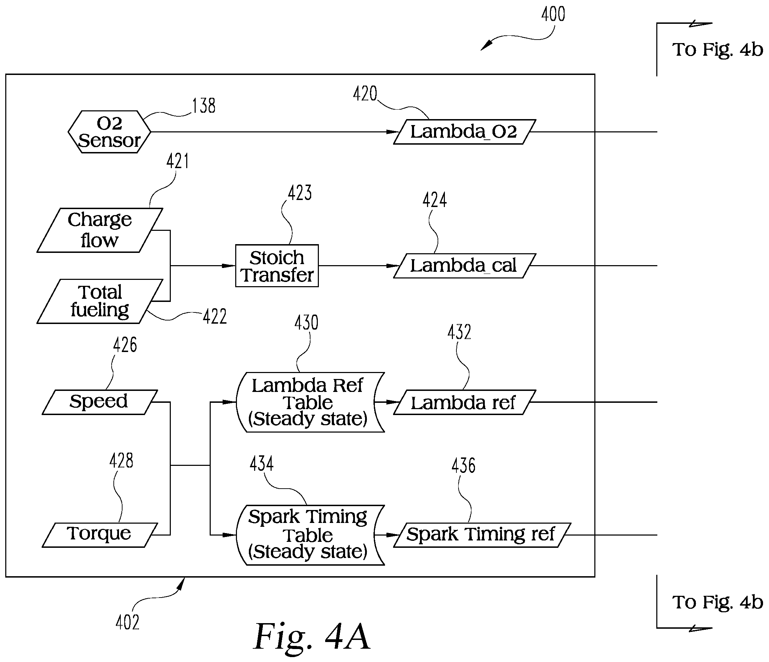

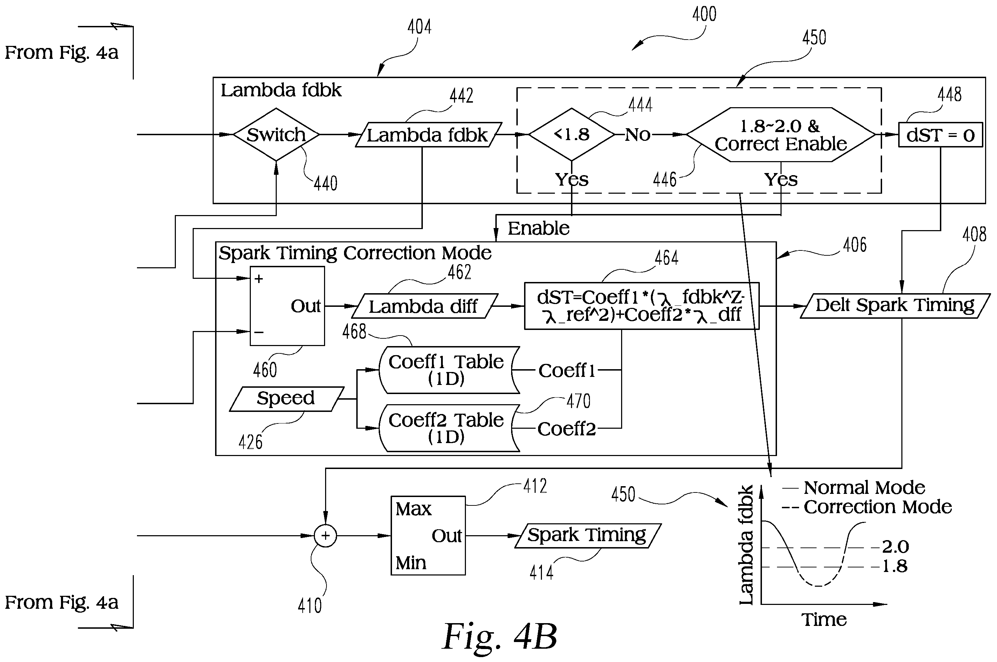

Referring to FIG. 4, an embodiment of a control process 400 for determining a spark timing adjustment which results in transient spark timing ($ST_{ref,tr}$) is disclosed. Control process 400 includes an input signal evaluation routine 402, a lambda feedback routine 404, and a spark timing correction routine 406. The lambda feedback routine 404 determines and provides the feedback lambda ($\lambda_{fdbk}$) 442 to spark timing correction routine 406. Lambda feedback routine 404 also enables spark timing correction routine 406 only when the feedback lambda ($\lambda_{fdbk}$) 442 is less than a calibrated lambda value.

The spark timing correction, also called delta spark timing 408 in FIG. 4, from the enabled spark timing correction routine 406 is summed with the steady state reference spark timing ($ST_{ref,ss}$) at summation operation 410. High and low spark timing adjustment limits are applied to the output from summation operation 410 at limiter operation 412, such as discussed above with respect to spark timing limiter 174. The spark timing output 414 from limiter operation 412 corresponds to the transient spark timing ($ST_{ref,tr}$) that is provided to engine 102 to delay the spark timing in response to the transient event.

Input signal evaluation routine 402 receives and outputs various signals that are used to determine various values in the process for determining the corrected spark timing, or transient spark timing ($ST_{ref,tr}$). For example, oxygen sensor 138 provides sensed oxygen amount outputs, which are used to determine a sensed lambda output Lambda_O2 420 ($\lambda_{O2sen}$). Input signal evaluation routine 402 also receives charge flow input 421 from charge flow sensor 134 and total fueling input 422 from engine sensor(s) 136. Inputs 421, 422 are evaluated at stoichiometric transfer function 423 to determine a calculated lambda output Lambda_cal 424 ($\lambda_{calc}$). Outputs 420, 424 are provided to conditional 440 of lambda feedback routine 404, as discussed further below.

Input signal evaluation routine 402 also receives an engine speed input 426 and an engine torque input 428 from engine sensors 136. The engine speed and torque inputs 426, 428 are used at steady state lambda reference table lookup operation 430 and steady state spark timing table lookup operation 434. Steady state lambda reference table lookup operation 430 provides a steady state lambda reference 432 ($\lambda_{ref,ss}$) which is used in spark timing correction routine 406. Steady state spark timing table lookup operation 434 provides a steady state spark timing reference 436 ($ST_{ref,ss}$) which is used at summation operation 410.

Lambda feedback routine 404 receives sensed lambda output Lambda_O2 420 ($\lambda_{O2sen}$) and calculated lambda output Lambda_cal 424 ($\lambda_{calc}$) at conditional 440. Conditional 440 evaluates the outputs 420 and/or 424 and determines a feedback lambda Lmbda_fdbk output 442 ($\lambda_{fdbk}$). Feedback lambda Lmbda_fdbk output 442 ($\lambda_{fdbk}$) is provided to differential calculation operation 460 of spark timing correction routine 406 and to first conditional 444 of lambda feedback routine.

Feedback lambda Lmbda_fdbk output 442 ($\lambda_{fdbk}$) is evaluated at first conditional 444 to determine if it is less than a lambda threshold to ensure the spark timing adjustment doesn't occur while fueling to engine 102 is too lean. If first conditional 444 is YES, then spark timing correction routine 406 is enabled. If first conditional 444 is NO, feedback lambda Lmbda_fdbk output 442 ($\lambda_{fdbk}$) is evaluated at second conditional 446 to determine if it is between the first lambda threshold and a second lambda threshold that is greater than the first lambda threshold, and if spark timing correction routine 406 is already enabled. If second conditional 446 is YES, spark timing correction routine 406 remains enabled. If second conditional 446 is NO, then spark timing correction routine 406 is not enabled and the change in spark timing is set to 0 at output 448. The delta spark timing 408 is therefore also set to zero, and the spark timing 414 corresponds to steady state lambda reference 432 ($\lambda_{ref,ss}$).

The first and second conditionals 444, 446 determine the presence or absence of a spark timing correction condition. In an embodiment, first and second conditionals 444, 446 provide an enablement and disablement of the spark timing correction based on lambda thresholds, such as graphically depicted in graph 450. The spark timing correction mode 452 is only enabled when the feedback lambda ($\lambda_{fdbk}$) is less than the first lambda threshold, and allowed to continue while the feedback lambda ($\lambda_{fdbk}$) is below the second lambda threshold. Otherwise, the spark timing 414 immediately reverts to steady state spark timing 436 once the feedback lambda ($\lambda_{fdbk}$) increases above the second lambda threshold.

When spark timing correction routine 406 is enabled, difference calculation operation 460 determines a difference between the feedback lambda Lmbda_fdbk output 442 ($\lambda_{fdbk}$) and steady state lambda reference 432 ($\lambda_{ref,ss}$) and provides a Lambda difference output 462 ($\lambda_{diff}$). As discussed above, the lambda difference output 462 ($\lambda_{diff}$) is provided to a spark timing correction calculation operation 464. Spark timing correction calculation operation 464 determines the spark timing correction to the steady state reference spark timing using Equation 1 discussed above. Coeff1 and Coeff2 can be determined from one dimensional tables 468, 470 based on engine speed input 426.

Spark timing correction routine 406, when enabled, outputs the spark timing correction, also called delta spark timing 408. The delta spark timing 408 is summed with the steady state reference spark timing ($ST_{ref,ss}$) at summation operation 410, high and low spark timing adjustment limits are applied to the output from summation operation 410 at limiter operation 412, and the output 414 from limiter operation 412 corresponds to the transient spark timing ($ST_{ref,tr}$) that is provided to engine 102 to delay the spark timing in response to the transient event.

Various aspects of the present disclosure are contemplated. For example, according to one aspect a system for controlling spark timing in an internal combustion engine is provided. The system includes an electronic controller configured to determine a spark timing correction condition for the internal combustion engine is present in response to one or more engine operating parameters; determine, in response to the spark timing correction condition being present, a lambda difference between a steady state lambda and a feedback lambda from operation of the internal combustion engine, the steady state lambda being based on engine speed and engine torque and the feedback lambda being based on at least one of a calculated lambda and a sensed lambda; determine a spark timing correction based on the lambda difference; and control the spark timing based on the spark timing correction to combust fuel in the internal combustion engine.

In an embodiment, the electronic controller is configured to determine the spark timing correction condition is present in response to the feedback lambda being less than a first lambda threshold.

In a further embodiment, the electronic controller is configured to determine the spark timing correction condition remains present in response to the feedback lambda being less than a second lambda threshold that is greater than the first lambda threshold.

In an embodiment, the electronic controller is configured to determine the calculated lambda based on a charge flow and a total fueling amount to the internal combustion engine and determine the sensed lambda based on an oxygen sensor output.

In an embodiment, the spark timing correction is determined by $dST =$

$$Coeff1 * (\lambda_{fdbk}^2 - \lambda_{ref,ss}^2) + Coeff2 * (\lambda_{fdbk} - \lambda_{ref,ss})$$ where dST is the spark timing correction, $\lambda_{fdbk}$ is the feedback lambda, $\lambda_{ref,ss}$ is the steady state lambda, and Coeff1 is a first coefficient and Coeff2 is a second coefficient that are from look-up tables and selected based on engine speed.

In a further embodiment, the first and second coefficients are calibrated using transient response tests to determine spark timing adjustments that will reduce or mitigate knock at various engine speeds.

In an embodiment, the electronic controller is configured to limit the spark timing correction based on at least one of a high change limit and a low change limit.

In an embodiment, the spark timing correction condition is a transient event and the electronic controller is configured to determine a final fuel amount to fuel the internal combustion engine in response to the transient event based on a fuel reference amount from a fueling table and a transient lambda limit that adjusts the fuel reference amount in response to the feedback lambda.

In an embodiment, the electronic controller is configured to adjust a steady state spark timing with the spark timing correction to control the spark timing.

In a further embodiment, the steady state spark timing is determined from a look-up table based on engine speed and engine torque.

In an embodiment, the electronic controller is configured to determine the spark timing correction without sensing for knock. In an embodiment, the internal combustion engine combusts hydrogen fuel.

In an embodiment, the system includes the internal combustion engine. The internal combustion engine includes a plurality of cylinders for receiving an intake air flow and fuel and a plurality of spark plugs associated with respective ones of the plurality of cylinders. The plurality of spark plug is controlled by the electronic controller to combust the intake air flow and fuel at the spark timing.

According to another aspect of the disclosure, a method for controlling a spark timing in an internal combustion engine is provided. The method includes determining a spark timing correction condition for the internal combustion engine is present in response to one or more engine operating parameters; determining, in response to the spark timing correction condition being present, a lambda difference between a steady state lambda and a feedback lambda during operation of the internal combustion engine, the steady state lambda being based on engine speed and engine torque and the feedback lambda being based on at least one of a calculated lambda and a sensed lambda; determining a spark timing correction based on the lambda difference; and controlling the spark timing based on the spark timing correction to combust a fuel injection amount in the internal combustion engine.

In an embodiment, determining the spark timing correction condition is present includes determining the feedback lambda is less than a first lambda threshold.

In a further embodiment, the method includes, after determining the spark timing correction condition is present, determining the spark timing correction condition remains present in response to the feedback lambda being less than a second lambda threshold that is greater than the first lambda threshold. In yet a further embodiment, the first lambda threshold is 1.8 and the second lambda threshold is 2.0.

In an embodiment, the calculated lambda is determined based on a charge flow and a total fueling amount to the internal combustion engine. The sensed lambda is determined based on an oxygen sensor output.

In an embodiment, the method includes determining a steady state spark timing based on engine torque and engine speed and applying the spark timing correction to the steady state spark timing to control the spark timing.

In an embodiment, the method includes limiting the spark timing correction based on at least one of a high change limit and a low change limit.

While the invention has been described in connection with what is presently considered to be the most practical and preferred embodiment, it is to be understood that the invention is not to be limited to the disclosed embodiment(s), but on the contrary, is intended to cover various modifications and equivalent arrangements included within the spirit and scope of the appended claims, which scope is to be accorded the broadest interpretation so as to encompass all such modifications and equivalent structures as permitted under the law. Furthermore, it should be understood that while the use of the word preferable, preferably, or preferred in the description above indicates that feature so described may be more desirable, it nonetheless may not be necessary and any embodiment lacking the same may be contemplated as within the scope of the invention, that scope being defined by the claims that follow. In reading the claims it is intended that when words such as "a," "an," "at least one" and "at least a portion" are used, there is no intention to limit the claim to only one item unless specifically stated to the contrary in the claim. Further, when the language "at least a portion" and/or "a portion" is used the item may include a portion and/or the entire item unless specifically stated to the contrary.

## Claims

1. A system for controlling a spark timing in an internal combustion engine, the system comprising:
   an electronic controller configured to:

   determine a spark timing correction condition for the internal combustion engine is present in response to one or more engine operating parameters;
   determine, in response to the spark timing correction condition being present, a lambda difference between a steady state lambda and a feedback lambda from operation of the internal combustion engine, the steady state lambda being based on engine speed and engine torque and the feedback lambda being based on at least one of a calculated lambda and a sensed lambda;
   determine a spark timing correction based on the lambda difference; and
   control the spark timing based on the spark timing correction to combust fuel in the internal combustion engine.

2. The system according to claim 1, wherein the electronic controller is configured to determine the spark timing correction condition is present in response to the feedback lambda being less than a first lambda threshold.

3. The system according to claim 2, wherein the electronic controller is configured to determine the spark timing correction condition remains present in response to the feedback lambda being less than a second lambda threshold that is greater than the first lambda threshold.

4. The system according to claim 1, wherein the electronic controller is configured to:

   (a) determine the calculated lambda based on a charge flow and a total fueling amount to the internal combustion engine; and
   determine the sensed lambda based on an oxygen sensor output, or
   (b) limit the spark timing correction based on at least one of a high change limit and a low change limit, or
   (c) adjust a steady state spark timing with the spark timing correction to control the spark timing, or
   (d) determine the spark timing correction without sensing for knock.

5. The system according to claim 1, wherein the spark timing correction is determined by:

$$dST = Coeff1 * (\lambda_{fdbk}^2 - \lambda_{ref,ss}^2) + Coeff2 * (\lambda_{fdbk} - \lambda_{ref,ss})$$

   where dST is the spark timing correction, $\lambda_{fdbk}$ is the feedback lambda, $\lambda_{ref,ss}$ is the steady state lambda, and Coeff1 is a first coefficient and Coeff2 is a second coefficient that are from look-up tables and selected based on engine speed.

6. The system according to claim 5, wherein the first and second coefficients are calibrated using transient response tests to determine spark timing adjustments that will reduce or mitigate knock at various engine speeds.

7. The system according to claim 1, wherein the spark timing correction condition is a transient event and the electronic controller is configured to determine a final fuel amount to fuel the internal combustion engine in response to the transient event based on a fuel reference amount from a fueling table and a transient lambda limit that adjusts the fuel reference amount in response to the feedback lambda.

8. The system according to claim 4, wherein the steady state spark timing is determined from a look-up table based on engine speed and engine torque.

9. The system according to claim 1, wherein the internal combustion engine combusts hydrogen fuel.

10. The system according to claim 1, further comprising the internal combustion engine, the internal combustion engine including:

a plurality of cylinders for receiving an intake air flow and fuel; and
a plurality of spark plugs associated with respective ones of the plurality of cylinders, the plurality of spark plug being controlled by the electronic controller to combust the intake air flow and fuel at the spark timing.

11. A method for controlling a spark timing in an internal combustion engine, the method comprising:

determining a spark timing correction condition for the internal combustion engine is present in response to one or more engine operating parameters;
determining, in response to the spark timing correction condition being present, a lambda difference between a steady state lambda and a feedback lambda during operation of the internal combustion engine, the steady state lambda being based on engine speed and engine torque and the feedback lambda being based on at least one of a calculated lambda and a sensed lambda;
determining a spark timing correction based on the lambda difference; and
controlling the spark timing based on the spark timing correction to combust a fuel injection amount in the internal combustion engine.

12. The method according to claim 11, wherein determining the spark timing correction condition is present includes determining the feedback lambda is less than a first lambda threshold.

13. The method according to claim 12, further comprising, after determining the spark timing correction condition is present, determining the spark timing correction condition remains present in response to the feedback lambda being less than a second lambda threshold that is greater than the first lambda threshold.

14. The method according to claim 13, wherein the first lambda threshold is 1.8 and the second lambda threshold is 2.0.

15. The method according to claim 11,

(a) wherein:

the calculated lambda is determined based on a charge flow and a total fueling amount to the internal combustion engine; and
the sensed lambda is determined based on an oxygen sensor output, or

(b) further comprising determining a steady state spark timing based on engine torque and engine speed; and applying the spark timing correction to the steady state spark timing to control the spark timing, or
(c) further comprising limiting the spark timing correction based on at least one of a high change limit and a low change limit.

*Fig. 1*

EP 4 686 823 A1

*Fig. 2*

*Fig. 3*

400

138
O2
Sensor

420
Lambda_O2

421
Charge
flow

423
Stoich
Transfer

424
Lambda_cal

Total
fueling

422

426
Speed

430
Lambda Ref
Table
(Steady state)

432
Lambda ref

428

Torque

434
Spark Timing
Table
(Steady state)

436
Spark Timing ref

402

*Fig. 4A*

EP 4 686 823 A1

From Fig. 4a

**Lambda fdbk** 404

Switch 440 → Lambda fdbk 442 → <1.8 444 —No 446→ 1.8~2.0 & Correct Enable → dST = 0 448

Yes    Yes

450

Enable

**Spark Timing Correction Mode** 406

+ / − Out 460 → Lambda diff 462 → $dST=Coeff1*(\lambda\_fdbk^Z-\lambda\_ref^2)+Coeff2*\lambda\_dff$ 464 → Delt Spark Timing 408

468

Coeff1 Table (1D) — Coeff1

Speed 426 460

Coeff2 Table (1D) 470 — Coeff2

+ 410 → Max Out Min 412 → Spark Timing 414

From Fig. 4a

450

— Normal Mode
-- Correction Mode

Lambda fdbk

2.0
1.8

Time

*Fig. 4B*

EP 4 686 823 A1

## EUROPEAN SEARCH REPORT

**Application Number**

EP 25 19 0823

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 826 880 B1 (MITSUBISHI MOTORS CORP [JP]) 12 May 2004 (2004-05-12) | 1,4, 6-11,15 | INV. F02D37/02 |
| A | * abstract; figures 1-8 * <br> * paragraphs [0091] - [0100] * | 2,3,5, 12-14 | F02D41/14 F02D41/18 F02P5/04 |
| X | EP 3 006 704 A1 (TOYOTA MOTOR CO LTD [JP]) 13 April 2016 (2016-04-13) | 1,4,6-8, 10,11,15 | F02P5/15 |
| A | * abstract; figures 1-8 * <br> * paragraph [0054] * | 2,3,5,9, 12-14 | ADD. F02P5/152 |
| X | US 5 448 975 A (SATO KENICHI [JP]) 12 September 1995 (1995-09-12) | 1,4,6-8, 10,11,15 | |
| A | * abstract; figures 1-11 * | 2,3,5,9, 12-14 | |

**TECHNICAL FIELDS SEARCHED (IPC)**

F02D
F02P

The present search report has been drawn up for all claims

| Place of search | Date of completion of the search | Examiner |
|---|---|---|
| Munich | 5 November 2025 | Mineau, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 686 823 A1

## ANNEX TO THE EUROPEAN SEARCH REPORT
## ON EUROPEAN PATENT APPLICATION NO.

EP 25 19 0823

This annex lists the patent family members relating to the patent documents cited in the above-mentioned European search report.
The members are as contained in the European Patent Office EDP file on
The European Patent Office is in no way liable for these particulars which are merely given for the purpose of information.

05-11-2025

| Patent document cited in search report | | Publication date | Patent family member(s) | | Publication date |
|---|---|---|---|---|---|
| EP 0826880 | B1 | 12-05-2004 | DE | 69729036 T2 | 21-04-2005 |
| | | | EP | 0826880 A2 | 04-03-1998 |
| | | | JP | 3211677 B2 | 25-09-2001 |
| | | | JP | H1068375 A | 10-03-1998 |
| | | | KR | 19980018329 A | 05-06-1998 |
| | | | US | 5875756 A | 02-03-1999 |
| EP 3006704 | A1 | 13-04-2016 | CN | 105247194 A | 13-01-2016 |
| | | | EP | 3006704 A1 | 13-04-2016 |
| | | | JP | 6041051 B2 | 07-12-2016 |
| | | | JP | WO2014188595 A1 | 23-02-2017 |
| | | | US | 2016090935 A1 | 31-03-2016 |
| | | | WO | 2014188595 A1 | 27-11-2014 |
| US 5448975 | A | 12-09-1995 | JP | H0783150 A | 28-03-1995 |
| | | | US | 5448975 A | 12-09-1995 |

EPO FORM P0459

For more details about this annex : see Official Journal of the European Patent Office, No. 12/82

16